# EUROPÄISCHE PATENTSCHRIFT

(11) **EP 3 490 773 B1**
(45) Veröffentlichungstag und Bekanntmachung des Hinweises auf die Patenterteilung: **14.04.2021**
(21) Anmeldenummer: 17746095.3
(22) Anmeldetag: 31.07.2017
(51) Int. Cl.: B29C 44/60, B29C 44/44, B29C 31/04

(54) **FÜLLINJEKTOR UND VERFAHREN ZUM BETREIBEN EINES FÜLLINJEKTORS**
FILLING INJECTOR AND METHOD FOR OPERATING A FILLING INJECTOR
INJECTEUR ET PROCÉDÉ POUR FAIRE FONCTIONNER UN INJECTEUR

(30) Priorität: 01.08.2016 DE 202016104222 U
(43) Veröffentlichungstag der Anmeldung: 05.06.2019
(73) Patentinhaber: Kurtz GmbH, 97892 Kreuzwertheim (DE)
(72) Erfinder: SEIDENFUSS, Harald, 97900 Külsheim (DE); DANZ, Manuel, 97877 Wertheim (DE); FROSCH, Stefan, 97084 Würzburg (DE); KEMMER, Constantin, 97828 Marktheidenfeld (DE); ROMANOV, Victor, 97877 Wertheim (DE)
(74) Vertreter: HGF
(86) Internationale Anmeldenummer: PCT/EP2017/069325
(87) Internationale Veröffentlichungsnummer: WO 2018/024676

(56) Entgegenhaltungen:
- DE-A1-102009 024 278
- JP-A- S5 898 130
- JP-A- H07 266 089
- US-A1- 2011 316 180

## Beschreibung

Die vorliegende Erfindung betrifft einen Füllinjektor für eine Kunststoffmaschine und ein Verfahren zum Betreiben eines solchen Füllinjektors.

Kunststoffmaschinen können z. B. Spritzgussmaschinen, aber auch Maschinen zum Herstellen von Kunststoffen aus Partikelschaumstoff sein.

Aus der DE 38 31 600 C1 sind ein Verfahren und eine Vorrichtung zum Einfüllen von thermoplastischen Schaumstoffpartikeln in das Formnest eines Formwerkzeugs bekannt, wobei es je nach Bedarf vor allem möglich sein soll, aus einem Vorratsbehälter thermoplastische Schaumstoffpartikel, nämlich treibmittelhaltige Schaumstoffpartikel, sowohl unter atmosphärischem Druck als auch mit Überdruck in ein entlüftetes Formwerkzeug zu füllen sowie nicht blähfähige, kompressible Schaumstoffpartikel mit Überdruck in ein unter gleich hohem Druck stehendes Formwerkzeug zu füllen und dabei Druckluft einzusparen und die Füllzeit zu verkürzen. Dies wird dadurch erreicht, dass die nach Beenden des Füllvorgangs in den Füllinjektoren und in den Zuführungsleitungen verbliebenen Schaumstoffpartikel in einen von dem Vorratsbehälter unabhängigen, nicht unter Druck stehenden weiteren Behälter zurück geblasen werden. Zum Einfüllen der Schaumstoffpartikel in das Formnest dient ein Füllinjektor, mit dessen Verschlusskolben die Zuführöffnung des Formnestes wahlweise verschlossen oder geöffnet werden kann. Über ein 2/2-Wegeventil wird Druckluft aus einer Druckluftquelle durch innerhalb des Füllinjektors angebrachte Injektordüsen gepresst, wodurch Schaumstoffpartikel über Zuführungsleitungen ein Verteilergehäuse und ein Verschlussorgan aus der Ablauföffnung eines Vorratsbehälters angesaugt und durch die Zuführöffnung in das Formnest gedrückt werden, wenn der Verschlusskolben zurückgezogen ist. Dieser wird über ein 3/2-Wegeventil mit Druckluft betätigt.

Aus der DE 197 47 645 A1 ist ebenfalls ein Verfahren zum Herstellen eines Schaumstoffkörpers und der Schaumstoffkörper bekannt, wobei auch hier Partikelschäume verarbeitet werden und das Formnest mit Schaumstoffpartikeln einer vorgegebenen Körnung befüllt wird. Das Befüllen erfolgt über einen oder mehrere Füller, die als Injektoren ausgebildet sind und die mit Druckluft beaufschlagt sind. Die Schaumstoffpartikel werden aus einem nicht dargestellten Vorratsbehälter angesaugt und mittels der Druckluft in das Formnest eingeblasen. Um eine gute Befüllung zu erhalten, wird während dieses Vorgangs das Formnest entlüftet.

Die Verwendung von Füllinjektoren ist auch aus der DE 10 2008 016 883 A1 bekannt.

Die DE 299 19 328 U1 betrifft einen Füllinjektor für Hartschaumstoff-Formteilautomaten und die DE 79 28 606 U1 betrifft ebenfalls einen Füllinjektor, insbesondere zum Fördern von vorgeschäumten, noch blähfähigen, kleinteiligen Styrolpolymerisaten. Bei diesen beiden Füllinjektoren weist eine Kolbenstange einen geringeren Durchmesser als der Kolben auf.

Die WO 2013/182555 A1 betrifft ein Verfahren zum Transport geschäumter thermoplastischer Polymerpartikel aus einem Behälter durch mindestens eine Rohrleitung, wobei zum Transport der geschäumten thermoplastischen Polymerpartikel ein Gasstrom durch die Rohrleitung angelegt wird und die geschäumten thermoplastischen Polymerpartikel mit einem Wasser enthaltenden Gleitmittel benetzt werden. Das Gleitmittel soll Wasser enthalten. Der erforderliche Druck wird mittels Luft oder Stickstoff erzeugt.

In der DE 10 2009 024 278 A1 ist eine Füllvorrichtung gemäß Anspruch 1 zum Füllen einer Form mit Kunststoffpartikeln aus thermoplastischem Kunststoff offenbart. Hierbei ist ein Betätigungskolben vorgesehen, der mit einem Schließkolben verbunden ist und diesen bewegen kann. Der Betätigungskolben weist hierbei eine konturierte Mantelwandung auf, in der sich in Längsrichtung erstreckende Luftführungen ausgebildet sind. In einer Öffnungsstellung ist der Schließkolben in einen Luftkanal eingefahren. Der Schließkolben ist derart dimensioniert, dass zwischen dem Schließkolben und dem Luftkanal ein Ringkanal ausgebildet ist, der als Austrittsdüse wirkt. Durch diese Austrittsdüse wird Luft geführt, die in einen Durchlass strömt.

Aus der WO 2015/091906 A1 ist ein Füllinjektor zum Befüllen einer Form mit Kunststoffpartikeln bekannt. Der Injektor besitzt ein Vorderteil und ein Basisteil, welche axial aufeinanderfolgend angeordnet sind. Das Vorderteil besitzt eine Injektormündung und einen Injektorkopf, die über ein Innenrohr miteinander verbunden sind, wobei um das Innenrohr herum ein Mantelrohr angeordnet ist. Das Basisteil besitzt ein an sich bekanntes pneumatisches Antriebselement, welches im Querschnitt quadratisch ausgebildet ist und über zwei Druckluftanschlüsse verfügt. Bei Betätigung der Druckluftanschlüsse wird ein Betätigungskolben in dem Antriebselement nach vorne oder hinten bewegt. An den Betätigungskolben ist eine Kolbenstange gekoppelt. Das Antriebselement ist somit als Kolbenzylindereinheit ausgebildet, wobei an dem vom Betätigungskolben entfernten Ende der Kolbenstange ein Schließkolben angeordnet ist. Am gegenüberliegenden Ende ist die pneumatische Antriebseinrichtung an eine Führungseinrichtung angeordnet. Die Führungseinrichtung besitzt ein Führungsgehäuse mit einem Führungsgehäusevorderteil und einem Führungsgehäusehinterteil.

Derartige Injektoren zum Befüllen einer Form mit Kunststoffpartikeln sind häufig modular aufgebaut, sodass unterschiedliche Vorderteile mit unterschiedlichen Hinterteilen kombiniert werden können.

Zudem sind derartige Füllinjektoren hochbelastete Bauteile, welche bei regelmäßigen Wartungen auch entsprechend einen Verschleißteilaustausch benötigen.

Das Mundstück, das Rohrteil des Unterteils des Injektorkopfs, verbleibt bei herkömmlichen Füllinjektoren auf Dauer am bzw. im Formwerkzeug. Das Injektorkopfoberteil, Zylinderkolben, Verschlusskolben sowie alle beweglichen Verschleißteile (z. B. Lager) werden regelmäßig ausgetauscht.

Das Injektorkopfunterteil und das Injektorkopfoberteil sind üblicherweise mit einer Schnellspannkupplung versehen, die mit einer Klammer gesichert ist, das heißt, sie gehen eine lösbare Verbindung ein.

Mit jedem gelieferten Werkzeug wird ein separater Füller geliefert. Die wechselbaren Teile werden jedoch im Betrieb oftmals durchgetauscht. Daher kommt es in der Produktion häufig zu Verwirrungen, welche einzelnen Teile der jeweiligen Injektoren tatsächlich benutzt worden sind. Um dem zu begegnen, werden bei manchen Produktionsbetrieben die Verschleißteile jede Woche ausgetauscht, unabhängig davon, ob ein Austausch notwendig wäre oder nicht.

Vorrichtungen zum Herstellen von Partikelschaumstoffteilen gehen aus der DE 10 2014 117 332 A1, DE 196 37 349 A1, EP 0 829 131 und der EP 224 103 B1 hervor.

Aus der US 2011/0316180 A1 geht eine Monitoreinrichtung zum Überwachen von Zyklen einer Gießform hervor. Die Gießform kann eine Gießform zum Blasformen, Druckgießen oder Prägen sein. Die Monitoreinrichtung weist einen mechanischen oder elektrischen oder magnetischen Schalter auf, mit welchem jede Betätigung der Form registriert wird. Mit der Monitoreinrichtung wird das Schließen der Gießform gezählt. Dies erlaubt unterschiedli che Auswertungen, insbesondere betriebswirtschaftliche Analysen. Die mit der Monitoreinrichtung ermittelten Zahlen können auch für eine vorbeugende Wartung genutzt werden.

Aufgabe der Erfindung ist es, einen Füllinjektor zu schaffen, mit dem die Wartung standardisiert, die Wartungskosten gesenkt sowie die Wartung nachvollziehbarer gemacht werden kann.

Die Aufgabe wird mit einem Füllinjektor für ein Formwerkzeug mit den Merkmalen des Anspruchs 1 gelöst.

Vorteilhafte Weiterbildungen sind in Unteransprüchen gekennzeichnet.

Die Erfindung betrifft somit einen Füllinjektor für ein Formwerkzeug mit einem Injektorgehäuse, das einen zylinderförmigen Hohlraum aufweist, in welchem eine Schließkolbeneinheit beweglich gelagert ist, wobei das Injektorgehäuse eine Zuführung für Kunststoffpartikel zum Hohlraum und an einem zum Formwerkzeug weisenden Ende eine Werkzeugmündung zum Zuführen des Kunststoffmaterials zu einem Formwerkzeug aufweist, und die Schließkolbeneinheit in einer Schließstellung so weit nach vorne geschoben ist, dass sie die Werkzeugmündung verschließt und in einer Offenstellung aus dem zylinderförmigen Hohlraum zumindest im Bereich zwischen der Zuführung und der Werkzeugmündung herausgezogen ist, wobei im Injektorgehäuse ein Sensor zum Detektieren einer vorbestimmten Detektionsposition der Schließkolbeneinheit vorhanden ist und eine Zähleinrichtung zum Zählen der Anzahl der Detektionspositionen der Schließkolbeneinheit, in welcher sie sich befindet.

Zudem betrifft die Erfindung einen Füllinjektor, bei dem das Injektorgehäuse aus einem Injektorrohr und einer Injektorkappe ausgebildet ist, die das Injektorrohr an dem von der Werkzeugmündung entfernten Ende abschließt. Die Injektorkappe kann separat vom Injektorrohr oder auch integral mit dem Injektorrohr ausgebildet sein.

Weiter vorteilhaft ist das Injektorrohr aus einem vorderen, die Werkzeugmündung aufweisenden Injektorrohrabschnitt und aus einem hinteren Injektorrohrabschnitt ausgebildet sein, welche lösbar miteinander gekoppelt sind.

Ferner kann vorteilhafterweise zwischen dem vorderen Injektorrohrabschnitt und dem hinteren Injektorrohrabschnitt ein vorderer Injektorkopf und ein hinterer Injektorkopf angeordnet sein, zwischen welchen die lösbare Verbindung ausgebildet ist.

Zudem betrifft die Erfindung einen Füllinjektor, bei dem der vordere oder der hintere Injektorkopf einen Luftanschluss und die Injektorkappe einen weiteren Luftanschluss aufweisen, und die Schließkolbeneinheit einen im hinteren Rohrabschnitt befindlichen Betätigungskolben besitzt, um durch entsprechende Zufuhr von Druckluft durch einen der beiden Luftanschlüsse die Schließkolbeneinheit nach vorne oder nach hinten zu bewegen.

Weiter vorteilhaft ist, wenn die Schließkolbeneinheit verlierungssicher an den hinteren Injektorrorabschnitt gekoppelt ist. Dies bedeutet, dass beim Lösen des hinteren Injektorrohrabschnitts die Schließkolbeneinheit daran hängt, wenn auch lose.

Der hintere Injektorkopf, der hintere Injektorrohrabschnitt und die Injektorkappe bilden hierbei eine Baueinheit, welche als Einheit einfach ausgetauscht werden kann. Von Vorteil ist dabei, dass eine später aufgeführte Identifikationsnummer praktisch immer dieser Baueinheit zugeordnet ist.

Weiter vorteilhaft weist der Füllinjektor eine Energieversorgung zum Betreiben des Sensors und der Zähleinrichtung auf.

Ferner kann vorteilhafterweise die Energieversorgung eine Batterie und/oder elektromagnetische Induktionseinrichtung sein, welche einen Teil der Bewegungsenergie der Schließkolbeneinheit in elektrische Energie umwandelt.

Weiter vorteilhaft weist der Füllinjektor eine Datenschnittstelle zum Übermitteln eines Zählerstandes auf.

Vorteilhafterweise besitzt die Datenschnittstelle eine Funkschnittstelle zum berührungslosen Übermitteln eines Zählerstandes oder ist als solche ausgebildet.

Bei einer weiteren vorteilhaften Ausführungsform umfasst der Füllinjektor eine Anzeigeeinrichtung zum Anzeigen eines oder mehrerer Betriebszustände, welche bspw. einem vorbestimmten Zählerstand der Zähleinrichtung oder einem vorbestimmten Zustand einer Energieversorgung entsprechen.

Vorteilhafterweise ist die vorbestimmte Stellung der Schließkolbeneinheit die Offenstellung, wobei die Schließkolbeneinheit vorzugsweise maximal zurückgezogen ist.

Weiter vorteilhaft ist an der Schließkolbeneinheit ein Magnetelement vorgesehen und der Sensor zum Detektieren der vorbestimmten Stellung ein Magnetsensor.

Vorteilhafterweise ist am Injektorgehäuse ein Kontaktsensor vorgesehen, der die vorbestimmte Stellung der Schließkolbeneinheit durch Kontaktieren der Schließkolbeneinheit detektiert.

Mit Vorteil kann die Zählereinrichtung zum Zählen von mehreren Zählerständen ausgebildet sein, wobei zumindest ein Teil der Zählerstände zurücksetzbar sind.

Ferner kann vorteilhafterweise die Zähleinrichtung an eine Identifikationseinrichtung gekoppelt sein, welche einen Identifikationscode enthält.

Erfindungsgemäß soll die Wartung der Füllinjektoren vereinfacht werden, sodass eine höhere Zuverlässigkeit der Maschinen erreicht wird. Zudem sollen unsachgemäße Manipulationen aber auch die Verwendung von Plagiaten oder anderen untauglichen Ersatzteilen oder der Einsatz von bereits im Verschleiß zu weit fortgeschrittenen Teilen verhindert werden.

Insgesamt ist somit das Ziel, ein sogenanntes "preventive maintenance", was bedeutet, dass aus Furcht vor zu großem Verschleiß z. B. in festen Intervallen, wie etwa wöchentlich, Teile ausgetauscht werden, was hohe Kosten verursacht, andererseits eben verhindert werden soll, dass zu spät ausgetauscht wird oder falsch ausgetauscht wird, was einerseits die Qualität mindert und zum anderen zu ungünstigen Zeitpunkten zu Ausfällen führen kann. Das verbessert die Planbarkeit, sodass die Wartung auf passende Momente gelegt werden kann, wie z. B. den Werkzeugwechsel oder einen Produktionsstopp aufgrund von Ferien oder Wochenendzeiten. Bislang war bei Füllinjektoren nicht genau bekannt, wann eine Wartung zu erfolgen hat.

Zudem kann mit den erfindungsgemäßen Maßnahmen verhindert werden, dass Plagiate bzw. Raubkopien verwendet werden, die bei Versagen die gesamte Maschine schädigen können, ohne dass der Maschinenhersteller hierüber eine Auskunft erhalten würde.

Somit wird als eine Maßnahme der Erfindung jedes Verschleißteil des Füllinjektors mit einer Identifikation versehen. Eine solche Identifikation umfasst z. B. das Produktionsdatum, das Modell und ggf. weitere Dinge kodiert.

Da am Markt zusätzliche elektrische Leitungen zum Füllinjektor abgelehnt werden, werden im oder am Füllinjektor ein Kontaktgeber und ein Kontaktnehmer vorgesehen. Beispielsweise kann die Anordnung eine Magnetschalteranordnung oder dergleichen sein. Insbesondere kann es sich um einen Magneten als Geber und eine Induktionsspule, einen Hall-Sensor oder einen Reedkontakt als Nehmer handeln. Hierdurch werden die Zyklen berührungslos und autonom gezählt. Alternativ können Zyklen mit vorhandenen Endkontakten gezählt werden. Dies hat aber einen erheblichen Verkabelungsaufwand zur Folge, wobei dann maschinenspezifisch gemessen wird, aber nicht füllinjektorspezifisch. Da beim Austausch eines Füllinjektors dann auch die Zyklen eines anderen Füllinjektors mit erfasst werden, ist dies nicht bevorzugt.

Vorzugsweise wird eine Zählereinrichtung verwendet, die autonom arbeitet, wobei die Energieversorgung mit dem Füllinjektor selbst verknüpft ist. Dementsprechend kann erfindungsgemäß eine Batterie hierfür verwendet werden oder z. B. die Kolbenbewegung über eine Induktionsspule zur Erzeugung elektrischer Energie genutzt werden. Auch andere Möglichkeiten des Energy Harvesting ergeben sich bei Füllinjektoren.

Erfindungsgemäß wird eine Leiterplatte vorgesehen, die am Füllinjektor so angeordnet ist, dass sie von außen nicht austauschbar oder manipulierbar ist. Diese Leiterplatte besitzt eine Antenne, einen RFID-Chip und Mikrocontroller. Über ein RFID-Lesegerät können die Daten berührungslos abgerufen werden, wobei sich die Möglichkeit ergibt, nach Wartung oder Reparatur durch autorisiertes Reparaturpersonal am Wartungsplatz der Zähler zurückgestellt werden kann, insbesondere auch genullt werden kann. Hierbei ist es von Vorteil, wenn nicht der Gesamtzählerstand auf null gesetzt wird, sondern nur die Zyklen nach der letzten Wartung. Über Kodierungen in der RFID-Verbindung zwischen dem Chip und dem Lesegerät kann auch festgestellt werden, wenn Unbefugte versuchen, auf die Leiterplatte bzw. auf die Daten auf der Leiterplatte zuzugreifen.

Erfindungsgemäß kann eine optische Anzeige vorhanden sein, die den Stand der Batterie, die Funktionalität der Elektronik und/oder den Wartungszustand anzeigt. Im einfachsten Fall kann die optische Anzeige z. B. eine LED-Anzeige sein, die abhängig von bestimmten Betriebszuständen an oder aus ist und/oder in bestimmten Intervallen blinkt und/oder in unterschiedlichen Farben leuchtet.

Vorzugsweise ist die Vorrichtung so am Füllinjektor angeordnet, dass sie nicht zerstörungsfrei entfernbar oder zu öffnen ist. Beispielsweise kann die Leiterplatte und/oder können die Antenne und weitere Sensorteile z. B. Magnetteile im entsprechenden Bauteil eingegossen sein, wobei die Batterie ebenfalls eingegossen sein kann. Insbesondere wenn die Batterie eine Lebensdauer hat, die höher ist, als ein Wartungsintervall, bei dem das entsprechende Teil des Füllinjektors, in dem die Batterie verbaut ist, ausgetauscht wird.

Darüber hinaus kann aber die Batterie auch von außen zugänglich sein, wobei eine Abdeckung der Batterie in diesem Fall entweder nicht zerstörungsfrei geöffnet werden kann oder über eine Plombierung verfügt, die beim Öffnen beschädigt wird. Vorzugsweise ist daher die Leiterplatte nicht Bestandteil eines solchen Deckels und verbleibt immer im Füllinjektor. Vorzugsweise werden beim Batterieaustausch gespeicherte Werte nicht gelöscht, sondern so auf einen Speicher geschrieben, dass sie bestehen bleiben. Bei einer vorteilhaften Ausführungsform besitzt der Deckel eine Milchglasscheibe, hinter der sich zumindest eine Leuchtdiode oder eine andere Leuchteinheit befindet. Sollte die Leuchtdiode leuchten, leuchtet der gesamte Deckel, was die Erkennung an der Maschine für den Maschinenbediener einfacher macht, da die Fläche größer ist.

Befindet sich die Vorrichtung in der Zylinderkappe des Füllinjektors, umfasst die Zylinderkappe das Zylinderkappengehäuse, den Deckel, die Batterie, die Leiterplatte, wobei die Leiterplatte alle elektronischen Komponenten, wie den Reedkontakt, den RFID-Controller, die Batteriehalterung, LEDs, die Spule als Antenne und Dichtringe enthält. Je nach Energieversorgung, das heißt entweder über Batterie oder Energy Harvesting, wird dementsprechend die Vorrichtung so ausgelegt, dass sie gegebenenfalls mehr oder weniger LEDs besitzt oder gar keine LED.

Die Zylinderkappe ist hierbei das Bauteil, an der sich der Luftanschluss des Zylinders für die Schließbewegung befindet. Der Luftanschluss zum Betätigen des Zylinders in Richtung Öffnen ist am oberen Teil des Injektorkopfs angeordnet. Die Grundfunktion der Zylinderkappe ist es, den Zylinder abzuschließen und Druckluft zuzuführen. Mit der Erfindung wird die Zylinderkappe zu einem weiteren funktionalen Bauteil.

Beim Energy Harvesting wird eine zusätzliche Spule vorzugsweise um den Zylinder herum angeordnet, wobei der Magnet, der an dem Kolben angeordnet ist, durch die Spule bewegt wird. Hierdurch kann elektrische Energie erzeugt werden, welche zum Betreiben der Elektronik verwendet werden kann. Ein kurzfristiger Zwischenspeicher, wie z. B. ein Kondensator, ist hierbei zweckmäßig und vor allem für LEDs von Bedeutung, da zum Zählen ein einmaliger Energieimpuls genügt.

Weiterhin betrifft die Erfindung ein Verfahren zum Betreiben eines oben erläuterten Füllinjektors, wobei bei Erreichen einer vorgeschriebenen Anzahl von Detektionspositionen ein Wartungssignal ausgegeben wird.

Durch das automatische Zählen und Ausgeben des Wartungssignales kann der im Stand der Technik übliche profilaktische Austausch von Teilen des Füllinjektors vermieden werden, wenn er nicht notwendig ist. Durch das Zählen der Detektionspositionen können Wartungsintervalle entsprechend der tatsächlichen Nutzung des Füllinjektors gesteuert eingehalten werden.

Das Wartungssignal kann als Lichtsignal mittels einer im Füllinjektor integrierten Leuchteinheit, wie z.B. einer Leuchtiode und/oder mittels eines Funksignals ausgegeben werden. Das Funksignal kann beispielsweise mittels eines RFID-Chips erzeugt werden.

Alternativ oder zusätzlich können auch andere Funktionszustände des Füllinjektors mittels eines entsprechenden Signales (Lichtsignal oder Funksignal) ausgegeben werden, wie z.B. der Ladezustand einer Batterie und/oder die Funktionalität bzw. der Betriebszustand einer im Füllinjektor enthaltenen Elektronik.

Vorzugsweise wird ein Gesamtzählerstand der Anzahl von Detektionspositionen gezählt, der über die Datenschnittstelle ausgelesen werden kann.

Das Verfahren ist vorzugsweise derart ausgebildet, dass der Gesamtzählerstand nie zurückgesetzt werden kann. Zusätzlich ist ein Zykluszählerstand vorgesehen, mit welchem ein Wartungszyklus überwacht werden kann. Dieser Zykluszählerstand kann bei jeder Wartung auf 0 zurückgesetzt werden.

Als Datenschnittstelle wird vorzugsweise eine Funkschnittstelle, insbesondere eine RFID-Funkschnittstelle verwendet.

Die Erfindung wird anhand einer Zeichnung beispielhaft erläutert.

Es zeigen dabei:

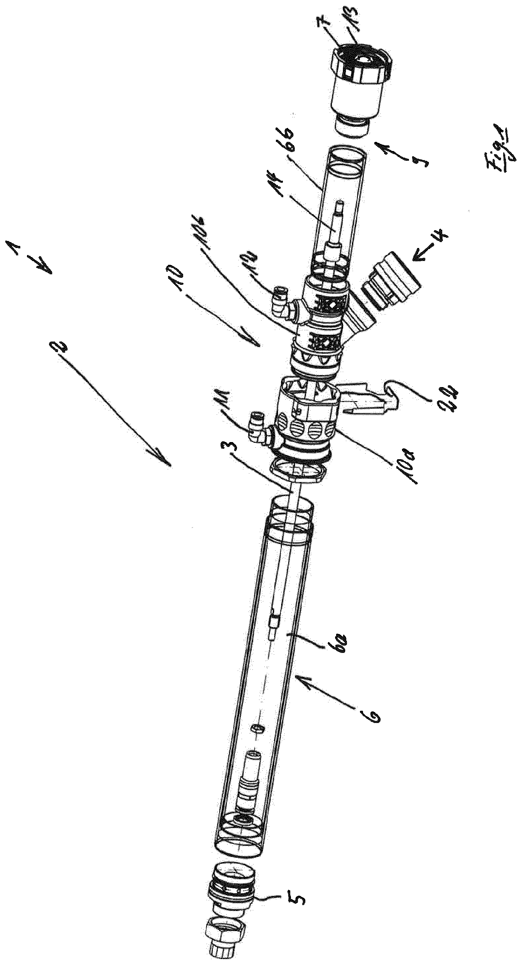

- Figur 1: schematisiert einen Füllinjektor in einer perspektivischen, teilzerlegten Ansicht;
- Figur 2: ein Detail nach Figur 1 zeigend einen Injektorkopf;
- Figur 3: einen perspektivische Ansicht einer Injektorkappe und des sich anschließenden Rohres;
- Figur 4: eine teilgeschnittene perspektivische Ansicht der Zylinderkappe nach Figur 3;
- Figur 5: eine Schnittansicht der Zylinderkappe nach Figur 4 mit einem am Kolben anzuordnenden Magnetring;

Ein erfindungsgemäßer Füllinjektor 1 für ein Formwerkzeug besitzt ein Injektorgehäuse 2, welches einen zylinderförmigen Hohlraum 6 aufweist, in welchem eine Schließkolbeneinheit 3 axial beweglich angeordnet und gelagert ist.

Das Injektorgehäuse 2 besitzt eine Zuführung 4 für Schaumstoffpartikel zum Hohlraum 6.

An einem zum Formwerkzeug weisenden Ende des zylinderförmigen Hohlraums 6 besitzt der Füllinjektor 1 eine Werkzeugmündung 5 zum Zuführen des Kunststoffmaterials zu einem Formwerkzeug.

In an sich bekannter Weise ist die Schließkolbeneinheit 3 in einer Schließstellung so weit nach vorne geschoben, dass sie die Werkzeugmündung 5 verschließt und in einer Offenstellung aus dem zylinderförmigen Hohlraum 6 zumindest im Bereich zwischen der Zuführung 4 und der Werkzeugmündung 5 herausgezogen ist.

Das Injektorgehäuse 2 ist aus einem Injektorrohr 6 und einer Injektorkappe 7 ausgebildet. Die Injektorkappe 7 verschließt das Injektorrohr 6 an dem von der Werkzeugmündung 5 entfernten Ende 9 bzw. dem der Werkzeugmündung 5 axial diametral gegenüberliegenden Ende 9.

Das Injektorrohr 6 ist hierbei aus einem vorderen, die Werkzeugmündung 5 aufweisenden Injektorrohrabschnitt 6a und aus einem hinteren Injektorrohrabschnitt 6b ausgebildet, welcher die Injektorkappe 7 aufweist.

Der Injektorrohrabschnitt 6a ist hierbei insbesondere axial deutlich länger ausgebildet als der hintere Injektorrohrabschnitt 6b.

Zwischen dem vorderen Injektorrohrabschnitt 6a und dem hinteren Injektorrohrabschnitt 6b ist zur Verbindung der beiden Injektorrohrabschnitte 6a, 6b ein Injektorkopf 10 angeordnet. Der Injektorkopf 10 besitzt einen vorderen Injektorkopf 10a und einen hinteren Injektorkopf 10b, wobei der vordere Injektorkopf 10a an dem vorderen Injektorrohrabschnitt 6a und der hintere Injektorkopf 10b an dem hinteren Injektorrohrabschnitt 6b ausgebildet ist.

Der vordere Injektorkopf 10a und der hintere Injektorkopf 10b sind lösbar miteinander verbindbar, womit auch der vordere Injektorrohrabschnitt 6a und der hintere Injektorrohrabschnitt 6b miteinander lösbar verbindbar sind.

Der vordere Injektorkopf 10a und/oder der hintere Injektorkopf 10b besitzen je einen Luftanschluss 11, 12.

Die Injektorkappe 7 besitzt ebenso einen Luftanschluss 13, der so ausgebildet ist, dass Luft durch die Injektorkappe 7 hindurch in den hinteren Injektorrohrabschnitt 6b führbar ist.

Die Schließkolbeneinheit 3 besitzt einen im hinteren Injektorrohrabschnitt 6b befindlichen Betätigungskolben 14, wobei der Betätigungskolben 14 an einem die Werkzeugmündung 5 verschließenden Ende gegenüberliegend angeordnet ist.

Vorzugsweise ist die Schließkolbeneinheit 3 insbesondere mit dem Betätigungskolben 14 verlierungssicher an dem hinteren Injektorrohrabschnitt 6b und/oder dem hinteren Injektorkopf 10b gekoppelt bzw. angeordnet.

Dies bedeutet, dass beim Lösen des hinteren Injektorrohrabschnitts 6b die Schließkolbeneinheit 3 hieran gekoppelt ist, wobei die Kopplung auch lose sein kann. Wesentlich ist, dass die Schließkolbeneinheit, der hintere Injektorrohrabschnitt 6b und die Injektorkappe 7 eine Baueinheit bilden, welche als Einheit einfach ausgetauscht werden können. Insbesondere verfügt diese Baugruppe über eine Identifikationsnummer, die dieser Baueinheit zugeordnet ist, um willkürliche Austauschungen der Einzelelemente zu verhindern.

Am Injektorgehäuse 2 oder im Injektorgehäuse 2 ist ein Sensor 8 zum Detektieren einer vorbestimmten Detektionsposition der Schließkolbeneinheit 3 und eine Zähleinrichtung zum Zählen der Anzahl der Detektionspositionen der Schließkolbeneinheit 3 angeordnet. Hiermit lässt sich insbesondere ermitteln, in welcher Stellung sich die Schließkolbeneinheit 3 befindet oder wie oft sie sich in der Detektionsposition befunden hat.

Die Detektionsposition kann sich im Prinzip an beliebiger Stelle am Injektorgehäuse befinden. Beispielsweise kann die Detektionsposition an der Werkzeugmündung am oder im Injektorrohrabschnitt 6a, im vorderen Injektorkopf 10a, im hinteren Injektorkopf 10b, im hinteren Injektorrohrabschnitt 6b oder an der Injektorkappe 7 vorhanden sein. Zu beachten ist hierbei, dass bei der Messung von Endanschlägen, das heißt bei der Messung an der Werkzeugmündung oder an der Injektorkappe Detektionspositionen ermittelt werden, die pro Arbeitshub nur einmal erreicht werden.

An den anderen Stellen ist die Detektionsposition dann so ausgewählt, dass jeder Hub, d. h. sowohl der Vor- als auch der Rückhub der Vorrichtung gezählt werden. Dies muss beachtet werden.

Der Sensor 8 kann somit sowohl an der oder in der Werkzeugmündung 5, am oder im Injektorrohrabschnitt 6a, im vorderen Injektorkopf 10a, im hinteren Injektorkopf 10b, im hinteren Injektorrohrabschnitt 6b oder an oder in der Injektorkappe 7 vorhanden sein.

Der Füllinjektor 1 kann für das Betreiben des Sensors 8 und/oder einer vorhandenen Zählereinrichtung eine Energieversorgung 15 besitzen. Hierdurch wird sichergestellt, dass der Füllinjektor autark bezüglich des Sensors und des Zählens ist.

Hierbei kann die Energieversorgung eine Batterie 15 und/oder eine elektromagnetische Induktionseinrichtung sein.

Wird eine elektromagnetische Induktionseinrichtung verwendet, kann diese einen Teil der Bewegungsenergie der Schließkolbeneinheit 3 in elektrische Energie umwandeln, z. B. durch einen Induktor.

Vorzugsweise sind gegebenenfalls Speicherelemente zum Speichern der beispielsweise durch Induktion erzeugten Energie vorhanden, insbesondere kann hierfür in an sich bekannter Weise ein Kondensator verwendet werden.

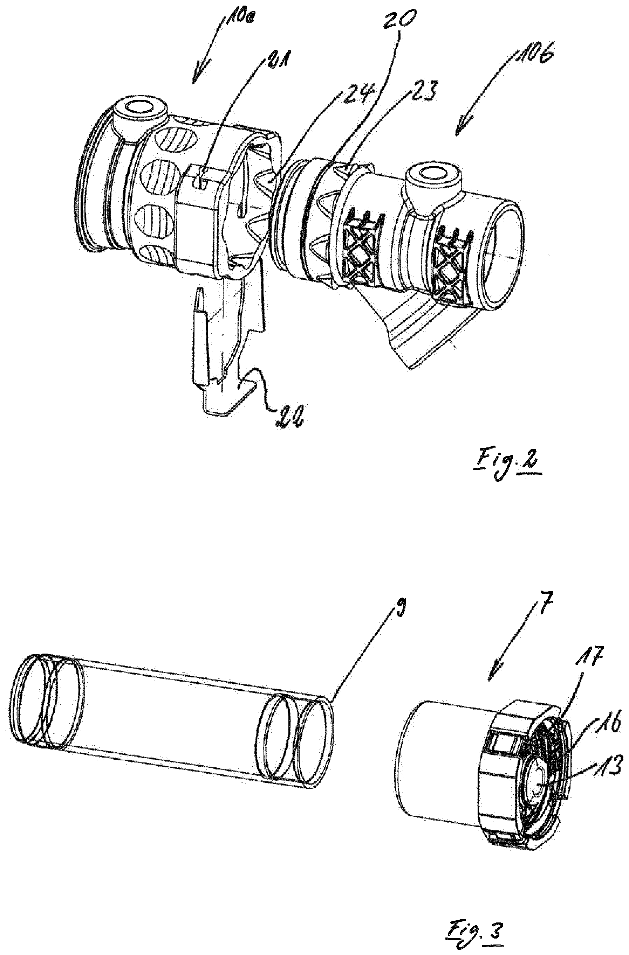

Bei einer vorteilhaften Ausführungsform der Erfindung (Figur 2) sind der vordere Injektorkopf 10a und der hintere Injektorkopf 10b axial ineinander steckbare Rohrabschnitte, wobei an einem der Injektorköpfe eine umlaufende radiale Verriegelungsnut 20 vorhanden ist.

Am jeweils anderen Injektorkopf 10a, 10b ist entsprechend eine korrespondierende Nut 21 vorhanden, welche in vollständig zusammengeschobenen bzw. eingesteckten Zustand der Injektorköpfe 10a, 10b mit der Nut 20 fluchtet. In die Nut 21 ist eine Verriegelungsklammer 22 einsteckbar, welche sowohl die Nuten 21 als auch die Nut 20 durchgreift und somit für eine axiale Verriegelung der Injektorköpfe 10a, 10b aneinander sorgt.

Vorzugsweise sind an dem Injektorkopf, der in den jeweiligen anderen Injektorkopf eingesteckt wird (dem Injektorkopf, der im Einsteckbereich über den geringeren Durchmesser verfügt) zumindest ein Zentrierungskeil 23 vorhanden, der in eine entsprechende Zentrierungsnut 24 am jeweils anderen Injektorkopf eingreifbar ausgebildet ist, sodass eine radiale Festlegung der beiden Injektorköpfe 10a, 10b aneinander erfolgt.

Zudem verfügt die Rohrverbindung zwischen den beiden Injektorköpfen 10a, 10b selbstverständlich über Dichtungen, die insbesondere als O-Ring-Dichtungen oder Dilag-Dichtungen und Führungen ausgebildet sind.

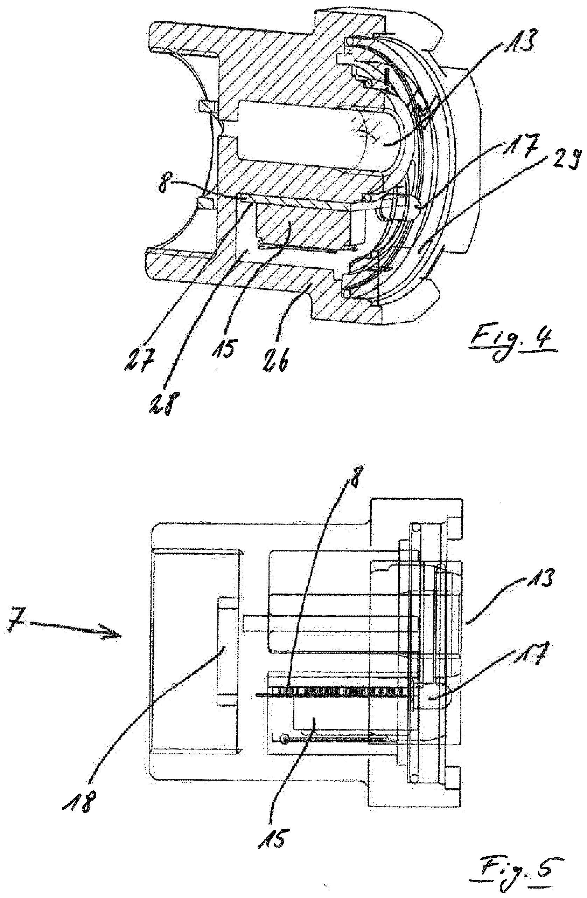

Bei einer vorteilhaften Ausführungsform sind Sensor und Zähleinrichtung an der Injektorkappe 7 ausgebildet (Figuren 4, 5).

Die Injektorkappe 7 ist hierzu im Wesentlichen zylindrisch ausgebildet und besitzt von einer Außenseite 25 her einen zylindrischen Druckluftanschluss 13, wobei der zylindrische Druckluftanschluss 13 nicht koaxial ausgebildet sein muss.

Zwischen dem Druckluftanschluss 13 und einer radialen Außenwandung 26 ist eine Leiterplatte 27 angeordnet.

Auf der Leiterplatte sind insbesondere ein RFID-Chip und ein Mikrocontroller angeordnet. Zudem kann auf der Leiterplatte ein Reed-Kontakt oder ein Hall-Sensor, welcher mit dem Magnetring oder anderen geeigneten Gebern interagiert, angeordnet sein, um die Stellung und/oder die Anzahl der Stellungen der Schließkolbeneinheit 3 zu erfassen.

Vorzugsweise benachbart zur Leiterplatte 27 ist die Energieversorgung, insbesondere die Energieversorgung in Form einer Batterie 15, vorhanden.

Zudem ist in diesem Bereich die Anzeige 17 vorhanden, wobei die Anzeige 17 insbesondere eine LED oder eine Mehrzahl von LEDs sein kann, die insbesondere zur Darstellung eines bestimmten Zustands der Batterie und/oder der Wartung oder weiterer gewünschter Parameter blinkt und insbesondere mit einer vorgegebenen Farbe blinkt.

Um den Druckluftanschluss 13 herum kann eine Datenschnittstelle zum Übermitteln des Zählerstands und insbesondere eine Spule oder Antenne 16 vorhanden sein, wobei die Antenne 16, das Fach 28 für die Batterie und der Raum für die Leiterplatte 27 und die LEDs 17 von einem Deckel 29 abgedeckt werden.

Um den Innenraum sichtbar zu machen, kann der Deckel 29 insbesondere klarsichtig oder teilopak ausgebildet sein.

Der Deckel 29 ist an der Injektorkappe 7 insbesondere so angeordnet, dass er nur durch eine Beschädigung oder die Beschädigung einer Plombierung oder dergleichen entfernbar ist, sodass Manipulationen des Innenraums sichtbar sind und insbesondere nur Wartungspersonal befugt ist, einen beschädigten Deckel oder eine beschädigte Plombierung zu ersetzen.

Um Manipulationen an der Leiterplatte 27 auszuschließen, kann die Leiterplatte 27 mit der Injektorkappe 7 einstückig ausgebildet sein und insbesondere in der Injektorkappe 7 vergossen bzw. eingegossen sein.

Vorteilhafterweise kann, wenn auf einen Energiespeicher in Form einer Batterie verzichtet wird und die Energie über Energy Harvesting zur Verfügung gestellt wird, die Energieerzeugung beispielsweise durch Induktion direkt zur Zählung verwendet werden, sodass eine Induktionsspule, die die Bewegung des Schließkolbens 3 erfasst, gleichzeitig der Sensor 8 ist.

### Bezugszeichen

- 1: Füllinjektor
- 2: Injektorgehäuse
- 3: Schließkolbeneinheit
- 4: Zuführung
- 5: Werkzeugmündung
- 6: Hohlraum
- 7: Injektorkappe
- 8: Sensor
- 9: Ende
- 10a: Injektorkopf
- 10b: Injektorkopf
- 11: Luftanschluss
- 12: Luftanschluss
- 13: Druckluftanschluss
- 14: Betätigungskolben
- 15: Energieversorgung
- 16: Datenschnittstelle
- 17: Anzeige
- 18: Magnetelement
- 20: Verriegelungsnut
- 21: Nut
- 22: Verriegelungsklammer
- 23: Zentrierungskeil
- 24: Zentrierungsnut
- 25: Außenseite
- 26: Außenwandung
- 27: Leiterplatte
- 28: Fach
- 29: Deckel
- 30: Antriebselement

## Patentansprüche

1. Füllinjektor (1) für ein Formwerkzeug mit einem Injektorgehäuse (2), das einen zylinderförmigen Hohlraum (6) aufweist, in welchem eine Schließkolbeneinheit (3) beweglich gelagert ist, wobei das Injektorgehäuse (2) eine Zuführung (4) für Kunststoffmaterial zum Hohlraum (6) und an einem zum Formwerkzeug weisenden Ende eine Werkzeugmündung (5) zum Zuführen von Kunststoffmaterial zu einem Formwerkzeug aufweist, und
die Schließkolbeneinheit (3) in einer Schließstellung so weit nach vorne geschoben ist, dass sie die Werkzeugmündung (5) verschließt und in einer Offenstellung aus dem zylinderförmigen Hohlraum (6) zumindest im Bereich zwischen der Zuführung (4) und der Werkzeugmündung (5) herausgezogen ist, **dadurch gekennzeichnet, dass** im oder am Injektorgehäuse (2) ein Sensor (8) zum Detektieren einer vorbestimmten Detektionsposition der Schließkolbeneinheit und eine Zähleinrichtung zum Zählen der Anzahl der Detektionspositionen der Schließkolbeneinheit (3), in welcher sie sich in der vorbestimmten Detektionsposition befindet, vorgesehen ist.

2. Füllinjektor nach Anspruch 1,
**dadurch gekennzeichnet,**
**dass** das Injektorgehäuse (2) aus einem Injektorrohr (6) und einer Injektorkappe (7) ausgebildet ist, die das Injektorrohr (6) an dem von der Werkzeugmündung (5) entfernten Ende (9) abschließt, wobei vorzugsweise das Injektorrohr (6) aus einem vorderen, die Werkzeugmündung (5) aufweisenden Injektorrohrabschnitt (6a) und aus einem hinteren Injektorrohrabschnitt (6b) ausgebildet ist, welche lösbar miteinander gekoppelt sind, und insbesondere zwischen dem vorderen Injektorrohrabschnitt (6a) und dem hinteren Injektorrohrabschnitt (6b) ein Injektorkopf (10) angeordnet ist, wobei ein vorderer Injektorkopf (10a) und ein hinterer Injektorkopf (10b) angeordnet sind, zwischen welchen die lösbare Verbindung ausgebildet ist, wobei der vordere Injektorkopf (10a) oder der hintere Injektorkopf (10b) einen Luftanschluss (11,12) und die Injektorkappe (7) einen weiteren Luftanschluss (13) aufweisen können, und die Schließkolbeneinheit (3) einen im hinteren Injektorrohrabschnitt (6b) befindlichen Betätigungskolben (14) besitzt, um durch entsprechende Zufuhr von Druckluft durch einen der beiden Luftanschlüsse die Schließkolbeneinheit nach vorne oder nach hinten zu bewegen.

3. Füllinjektor nach Anspruch 2,
**dadurch gekennzeichnet,**
**dass** die Schließkolbeneinheit (3) verlierungssicher an den hinteren Injektorrohrabschnitt (6b) gekoppelt ist.

4. Füllinjektor nach einem der Ansprüche 1 bis 3,
**dadurch gekennzeichnet,**
**dass** der Füllinjektor (1) eine Energieversorgung (15) zum Betreiben des Sensors (8) und der Zähleinrichtung aufweist, welche vorzugsweise als Batterie (15) und/oder elektromagnetische Induktionseinrichtung ausgebildet ist, welche einen Teil der Bewegungsenergie der Schließkolbeneinheit (3) in elektrische Energie umwandelt.

5. Füllinjektor nach einem der Ansprüche 1 bis 4,
**dadurch gekennzeichnet,**
**dass** der Füllinjektor (1) eine Datenschnittstelle (16) zum Übermitteln eines Zählerstandes aufweist, wobei die Datenschnittstelle vorzugsweise als Funkschnittstelle zum berührungslosen Übermitteln eines Zählerstandes ausgebildet ist.

6. Füllinjektor nach einem der Ansprüche 1 bis 5,
**dadurch gekennzeichnet,**
**dass** der Füllinjektor eine Anzeigeeinrichtung (17) zum Anzeigen eines oder mehrerer Betriebszustände aufweist, welche bspw. einem vorbestimmten Zählerstand der Zähleinrichtung oder einem vorbestimmten Zustand einer Energieversorgung entsprechen.

7. Füllinjektor nach einem der Ansprüche 1 bis 6,
**dadurch gekennzeichnet,**
**dass** die vorbestimmte Stellung der Schließkolbeneinheit (3) die Offenstellung ist, wobei die Schließkolbeneinheit (3) vorzugsweise maximal zurückgezogen ist.

8. Füllinjektor nach einem der Ansprüche 1 bis 7,
**dadurch gekennzeichnet,**
**dass** an der Schließkolbeneinheit (3) ein Magnetelement (18) vorgesehen ist und der Sensor (8) zum Detektieren der vorbestimmten Stellung ein Magnetsensor ist.

9. Füllinjektor nach einem der Ansprüche 1 bis 8,
**dadurch gekennzeichnet,**
**dass** am Injektorgehäuse (2) ein Kontaktsensor (8) vorgesehen ist, der die vorbestimmte Stellung der Schließkolbeneinheit durch Kontaktieren der Schließkolbeneinheit detektiert.

10. Füllinjektor nach einem der Ansprüche 1 bis 9,
**dadurch gekennzeichnet,**
**dass** die Zählereinrichtung zum Zählen von mehreren Zählerständen ausgebildet ist, wobei zumindest ein Teil der Zählerstände zurücksetzbar sind, und/oder
**dass** die Zähleinrichtung an eine Identifikationseinrichtung gekoppelt ist, welche einen Identifikationscode enthält.

11. Füllinjektor nach einem der Ansprüche 1 bis 10,
**dadurch gekennzeichnet,**
**dass** der Füllinjektor (1) ein Füllinjektor (1) für ein Formwerkzeug zum Erzeugen von Partikelschaumstoffteilen ist, wobei die Zuführung (4) zum Zuführen von Schaumstoffpartikeln und die Werkzeugmündung (5) zum Zuführen der Schaumstoffpartikel zu einem Formwerkzeug ausgebildet sind.

12. Verfahren zum Betreiben eines Füllinjektors (1) nach einem der Ansprüche 1 bis 11,
**dadurch gekennzeichnet,**
**dass** bei Erreichen einer vorbestimmten Anzahl von Detektionspositionen ein Wartungssignal ausgegeben wird, wobei das Wartungssignal vorzugsweise als Lichtsignal mittels einer im Füllinjektor integrierten Leuchteinheit, wie z.B. einer Leuchtdiode, und/oder mittels eines Funksignals ausgegeben wird.

13. Verfahren nach Anspruch 12,
**dadurch gekennzeichnet,**
**dass** ein Signal des Ladezustandes einer Batterie und/oder der Funktionalität einer im Füllinjektor enthaltenen Elektronik ausgegeben wird.

14. Verfahren, insbesondere nach Anspruch 12 oder 13, zum Betreiben eines Füllinjektors (1) nach einem der Ansprüche 1 bis 11,
**dadurch gekennzeichnet,**
**dass** ein Gesamtzählerstand der Anzahl von Detektionspositionen gezählt wird, der über eine Datenschnittstelle ausgelesen werden kann.

15. Verfahren nach Anspruch 14,
**dadurch gekennzeichnet,**
**dass** als Datenschnittstelle eine Funkschnittstelle verwendet wird.

## Claims

1. A filling injector (1) for a molding tool comprising an injector housing (2) which has a cylindrical cavity (6) in which a closure piston unit (3) is movably mounted, the injector housing (2) having a feed (4) for plastic material to the cavity (6) and, at an end facing the molding tool, a tool mouth (5) for feeding plastic material to a molding tool, and
the closure piston unit (3) is pushed forward in a closed position to such an extent that it closes the tool mouth (5) and in an open position is pulled out of the cylindrical cavity (6) at least in the region between the feed (4) and the tool mouth (5), **characterized in that**
a sensor (8) for detecting a predetermined detection position of the closure piston unit and a counting device for counting the number of detection positions of the closure piston unit (3), in which it is located in the predetermined detection position, are provided in or on the injector housing (2).

2. The filling injector according to claim 1,
**characterized in that**
the injector housing (2) is formed of an injector tube (6) and an injector cap (7) which closes off the injector tube (6) at the end (9) remote from the tool mouth (5), wherein preferably the injector tube (6) is formed of a front injector tube section (6a) comprising the tool mouth (5) and of a rear injector tube section (6b), which are detachably coupled to each other, and in particular an injector head (10) is arranged between the front injector tube section (6a) and the rear injector tube section (6b), wherein a front injector head (10a) and a rear injector head (10b) are arranged, between which the releasable connection is formed, wherein the front injector head (10a) or the rear injector head (10b) may have an air connection (11, 12) and the injector cap (7) may have a further air connection (13), and the closure piston unit (3) has an actuating piston (14) located in the rear injector tube section (6b) in order to move the closure piston unit forwards or backwards by a respective supply of compressed air through one of the two air connections.

3. The filling injector according to claim 2,
**characterized in that**
the closure piston unit (3) is coupled to the rear injector tube section (6b) in a captive manner.

4. The filling injector according to any of the claims 1 to 3,
**characterized in that**
the filling injector (1) has an energy supply (15) for operating the sensor (8) and the counting device, which is preferably designed as a battery (15) and/or an electromagnetic induction device, which converts a part of the kinetic energy of the closure piston unit (3) into electrical energy.

5. The filling injector according to any of the claims 1 to 4,
**characterized in that**
the filling injector (1) has a data interface (16) for transmitting a counter reading, the data interface preferably being designed as a radio interface for a contactless transmission of the counter reading.

6. The filling injector according to any of the claims 1 to 5,
**characterized in that**
the filling injector has a display device (17) for displaying one or more operating states, which correspond, for example, to a predetermined counter reading of the counting device or to a predetermined state of an energy supply.

7. The filling injector according to any of the claims 1 to 6,
**characterized in that**
the predetermined position of the closure piston unit (3) is the open position in which the closure piston unit (3) is preferably maximally retracted.

8. The filling injector according to any of the claims 1 to 7,
**characterized in that**
a magnetic element (18) is provided on the closure piston unit (3), and the sensor (8) for detecting the predetermined position is a magnetic sensor.

9. The filling injector according to any of the claims 1 to 8,
**characterized in that**
the injector housing (2) is provided with a contact sensor (8) which detects the predetermined position of the closure piston unit by contacting the closure piston unit.

10. The filling injector according to any of the claims 1 to 9,
**characterized in that**
the counter device is designed to count a plurality of counter readings, at least some of the counter readings being resettable, and/or
the counting device is coupled to an identification device which contains an identification code.

11. The filling injector according to any of the claims 1 to 10,
**characterized in that**
the filling injector (1) is a filling injector (1) for a molding tool for producing particulate foam parts, the feed (4) being designed for feeding foam particles and the tool mouth (5) being designed for feeding the foam particles to a molding tool.

12. A method for operating a filling injector (1) according to any one of the claims 1 to 11,
**characterized in that**
a maintenance signal is output when a predetermined number of detection positions is reached, the maintenance signal preferably being output as a light signal by means of a lighting unit integrated in the filling injector, such as a light-emitting diode, and/or by means of a radio signal.

13. The method according to claim 12,
**characterized in that**
a signal of the state of charge of a battery and/or of the functionality of an electronic unit contained in the filling injector is output.

14. The method, in particular according to claim 12 or 13, for operating a filling injector (1) according to any of the claims 1 to 11,
**characterized in that**
a total counter reading of the number of detection positions is counted, which can be read out via a data interface.

15. The method according to claim 14,
**characterized in that**
a radio interface is used as the data interface.

## Revendications

1. Injecteur de remplissage (1) pour un outil de formage, comportant un boîtier d'injecteur (2) qui présente une cavité (6) en forme de cylindre dans laquelle une unité de piston de fermeture (3) est logée de manière mobile, sachant que le boîtier d'injecteur (2) présente une conduite d'amenée (4) pour l'amenée de matière synthétique à la cavité (6) et, à une extrémité dirigée vers l'outil de formage, une embouchure d'outil (5) pour l'amenée de matière synthétique à un outil de formage, et
l'unité de piston de fermeture (3) dans une position fermée est poussée vers l'avant jusqu'à obturer l'embouchure d'outil (5) et dans une position ouverte est retirée de la cavité (6) en forme de cylindre au moins dans la zone entre la conduite d'amenée (4) et l'embouchure d'outil (5), **caractérisé en ce qu'**un capteur (8) permettant de détecter une position de détection prédéterminée de l'unité de piston de fermeture et un dispositif de comptage permettant de compter le nombre de positions de détection de l'unité de piston de fermeture (3) dans lequel elle se trouve dans la position de détection prédéterminée sont prévus dans ou au niveau du boîtier d'injecteur (2).

2. Injecteur de remplissage selon la revendication 1,
**caractérisé en ce que**
le boîtier d'injecteur (2) est constitué d'un tube d'injecteur (6) et d'un capuchon d'injecteur (7) qui clôt le tube d'injecteur (6) à l'extrémité (9) éloignée de l'embouchure d'outil (5), sachant que de préférence le tube d'injecteur (6) est constitué d'une section de tube d'injecteur avant (6a) présentant l'embouchure d'outil (5) et d'une section de tube d'injecteur arrière (6b), lesquelles sont couplées l'une à l'autre de manière détachable, et une tête d'injecteur (10) est disposée en particulier entre la section de tube d'injecteur avant (6a) et la section de tube d'injecteur arrière (6b), sachant qu'une tête d'injecteur avant (10a) et une tête d'injecteur arrière (10b) sont disposées, entre lesquelles la liaison détachable est constituée, sachant que la tête d'injecteur avant (10a) ou la tête d'injecteur arrière (10b) peuvent présenter un raccord d'air (11, 12) et le capuchon d'injecteur (7) peut présenter un raccord d'air (13) supplémentaire, et l'unité de piston de fermeture (3) comporte un piston d'actionnement (14) situé dans la section de tube d'injecteur arrière (6b) pour déplacer l'unité de piston de fermeture vers l'avant ou vers l'arrière par amenée correspondante d'air comprimé par un des deux raccords d'air.

3. Injecteur de remplissage selon la revendication 2,
**caractérisé en ce que**
l'unité de piston de fermeture (3) est couplée à la section de tube d'injecteur arrière (6b) de manière à ne pas pouvoir se perdre.

4. Injecteur de remplissage selon l'une des revendications 1 à 3,
**caractérisé en ce que**
l'injecteur de remplissage (1) présente une alimentation en énergie (15) pour le fonctionnement du capteur (8) et du dispositif de comptage, laquelle est constituée de préférence comme batterie (15) et/ou dispositif à induction électromagnétique, laquelle convertit une partie de l'énergie cinétique de l'unité de piston de fermeture (3) en énergie électrique.

5. Injecteur de remplissage selon l'une des revendications 1 à 4,
**caractérisé en ce que**
l'injecteur de remplissage (1) présente une interface de données (16) pour la transmission d'un relevé de compteur, sachant que l'interface de données est constituée de préférence comme interface radio pour la transmission sans contact d'un relevé de compteur.

6. Injecteur de remplissage selon l'une des revendications 1 à 5,
**caractérisé en ce que**
l'injecteur de remplissage présente un dispositif d'affichage (17) pour l'affichage d'un ou plusieurs états de fonctionnement, lesquels correspondent par exemple à un relevé de compteur prédéterminé du dispositif de comptage ou à un état prédéterminé d'une alimentation en énergie.

7. Injecteur de remplissage selon l'une des revendications 1 à 6,
**caractérisé en ce que**
la position prédéterminée de l'unité de piston de fermeture (3) est la position ouverte, dans laquelle l'unité de piston de fermeture (3) est de préférence rétractée au maximum.

8. Injecteur de remplissage selon l'une des revendications 1 à 7,
**caractérisé en ce que**
un élément magnétique (18) est prévu au niveau de l'unité de piston de fermeture (3) et le capteur (8) permettant de détecter la position prédéterminée est un capteur magnétique.

9. Injecteur de remplissage selon l'une des revendications 1 à 8,
**caractérisé en ce que**
un capteur de contact (8) qui détecte la position prédéterminée de l'unité de piston de fermeture par mise en contact de l'unité de piston de fermeture est prévu au niveau du boîtier d'injecteur (2).

10. Injecteur de remplissage selon l'une des revendications 1 à 9,
**caractérisé en ce que**
le dispositif de comptage est constitué pour le comptage de plusieurs relevés de compteur, sachant qu'au moins une partie des relevés de compteur sont réinitialisables, et/ou
le dispositif de comptage est couplé à un dispositif d'identification, lequel contient un code d'identification.

11. Injecteur de remplissage selon l'une des revendications 1 à 10,
**caractérisé en ce que**
l'injecteur de remplissage (1) est un injecteur de remplissage (1) pour un outil de formage permettant de générer des pièces en mousse de particules, sachant que la conduite d'amenée (4) est constituée pour l'amenée de particules de mousse et l'embouchure d'outil (5) pour l'amenée des particules de mousse à un outil de formage.

12. Procédé pour le fonctionnement d'un injecteur de remplissage (1) selon l'une des revendications 1 à 11,
**caractérisé en ce que**
lors de l'atteinte d'un nombre prédéterminé de positions de détection, un signal d'entretien est émis, sachant que le signal d'entretien est émis de préférence comme signal lumineux moyennant une unité luminescente intégrée dans l'injecteur de remplissage, comme par ex. une diode électroluminescente, et/ou moyennant un signal radio.

13. Procédé selon la revendication 12,
**caractérisé en ce que**
un signal de l'état de charge d'une batterie et/ou de la fonctionnalité d'un dispositif électronique contenu dans l'injecteur de remplissage est émis.

14. Procédé, en particulier selon la revendication 12 ou 13, pour le fonctionnement d'un injecteur de remplissage (1) selon l'une des revendications 1 à 11,
**caractérisé en ce que**
un relevé de compteur total du nombre de positions de détection, lequel peut être lu via une interface de données, est compté.

15. Procédé selon la revendication 14,
**caractérisé en ce que**
une interface radio est utilisée comme interface de données.
